(19) Europäisches Patentamt
European Patent Office
Office européen des brevets

(11) EP 0 706 466 B1

(12) **EUROPÄISCHE PATENTSCHRIFT**

(45) Veröffentlichungstag und Bekanntmachung des Hinweises auf die Patenterteilung:
18.12.1996 Patentblatt 1996/51

(21) Anmeldenummer: 94920376.4

(22) Anmeldetag: 01.07.1994

(51) Int. Cl.$^6$: **B60T 11/10**, B60K 41/20

(86) Internationale Anmeldenummer:
PCT/DE94/00767

(87) Internationale Veröffentlichungsnummer:
WO 95/01898 (19.01.1995 Gazette 1995/04)

(54) **VORRICHTUNG ZUM BREMSEN**

BRAKING DEVICE

DISPOSITIF DE FREINAGE

(84) Benannte Vertragsstaaten:
DE FR GB IT

(30) Priorität: 03.07.1993 DE 4322157
30.06.1994 DE 4422664

(43) Veröffentlichungstag der Anmeldung:
17.04.1996 Patentblatt 1996/16

(73) Patentinhaber:
• **Lüpges, Peter**
  **D-41065 Mönchengladbach (DE)**
• **Wagels, Dieter**
  **D-41065 Mönchengladbach (DE)**

(72) Erfinder:
• **Lüpges, Peter**
  **D-41065 Mönchengladbach (DE)**

• **Wagels, Dieter**
  **D-41065 Mönchengladbach (DE)**

(74) Vertreter: **von Creytz, Dietrich, Dipl.-Phys.**
**Tannenweg 25**
**41844 Wegberg (DE)**

(56) Entgegenhaltungen:
DE-U- 8 911 963          DE-U- 9 110 739
GB-A- 2 250 070          US-A- 3 726 369
US-A- 4 146 108          US-A- 5 115 162

• PATENT ABSTRACTS OF JAPAN vol. 17, no. 68 (M-1365) 10. Februar 1993 & JP,A,04 274 940 (SUROO TOTSUPU) 30. September 1992

## Beschreibung

Die vorliegende Erfindung betrifft eine Vorrichtung zum Bremsen mit den Merkmalen des Oberbegriffs des Patentanspruchs 1 oder 2.

Bei herkömmlich ausgebildeten Bremsen für Fahrzeuge, insbesondere für Personenkraftwage, Busse oder Lastkraftwagen, bei denen der Bremsvorgang durch die Betätigung des Bremspedals mit dem Fuß ausgelöst wird, setzt sich die Anhaltehazeit aus einer Reflexzeit, einer Reaktionszeit, einer Bremsansprechzeit und der eigentlichen Bremszeit zusammen. Dabei wird im Rahmen der vorliegenden Anmeldung unter Reflexzeit die Zeit verstanden, die der Fahrer benötigt, um geistig zu erfassen, daß eine Bremsung erforderlich wird. Die Reaktionszeit stellt die Zeit dar, die erforderlich ist, um den rechten Fuß des Fahrers vom Gaspedal zu lösen und in Richtung auf das Bremspedal hin zu bewegen. Hieran schließt sich die Bremsansprechzeit an, die darauf zurückgeführt wird, daß beim Treten der Bremse die hierbei ablaufenden mechansichen und/oder hydraulischen Vorgänge eine gewisse Zeit erfordern, bis der eigentliche Bremsvorgang eingeleitet wird. Unter dem Begriff Bremszeit wird der Zeitraum verstanden, der zwischen dem ersten Kontakt der Bremse mit dem Rad und dem Stillstand des Fahrzeugs verstreicht.

Abhängig von dem jeweiligen Zustand des Fahrers und der technischen Konstruktion des Bremssystems erfordern die Reflexzeit, die Reaktionszeit und die Bremsansprechzeit etwa 15 bis etwa 50 % der gesamten Anhaltezeit, was in vielem Bremssituationen bei der heutigen Verkehrsdichte zu erheblichen Problemen führen kann.

Aus der US-A-41 46 108 ist eine Vorrichtung eingangs genannter Art zum Abbremsen eines Fahrzeugs mit einem Bremssteuersystem bekannt. Dem Bremssteuersystem wird eine Erfassungseinrichtung zum Feststellen der Position des das Gas- und Bremspedal normalerweise betätigenden Fahrerfußes zugeordnet, derart, daß bei einer reflexartigen Änderung der Position des Fußes auf dem Gaspedal von einer ersten Stellung in eine zweite Stellung die Erfassungseinrichtung ein Signal einem Schalter zuführt, der zwangsläufig den Bremsvorgang einleitet. Nachteilig bei diesem Stand der Technik ist es, daß, falls aus Versehen eine schnelle Fußbewegung ausgeführt wird (z. B. weil das Fahrzeug gerade durch ein Loch in der Straße fährt), eine unbeabsichtigte Bremsung eingeleitet wird.

Der Erfindung liegt die Aufgabe zugrunde, in einer Vorrichtung der in den Präambeln der Ansprüche 1 oder 2 angegebenen Gattung zusätzlich sicher zu stellen, so daß nicht bei einer reflexartigen Rücknahme des Gaspedals, die durch das erste Signal des ersten Sensors angezeigt wird, bereits die automatische Bremsung ausgelöst wird, obwohl der Fahrerfuß gar nicht vom Gaspedal wegbewegt bzw. in Richtung auf das Bremspedal bewegt wurde. Diese Aufgabe wird erfindungsgemäß durch eine Vorrichtung zum Bremsen mit den kennzeichnenden Merkmalen des Patentanspruchs 1 oder 2 gelöst.

Erfindungsgemäß wird der Bremsvorgang erst ausgelöst, wenn das erste Signal eine reflexartige Bewegung des Fahrerfußes anzeigt und wenn ein weiteres Signal auftritt. Es kann sich hierbei entweder um das zweite Signal handeln, das anzeigt, daß der Fahrerfuß vom Gaspedal abgehoben ist, oder um das dritte Signal handeln, das anzeigt, daß der Fahrerfuß sich vom Gaspedal zum Bremspedal bewegt.

Bei einer ersten Alternative der erfindungsgemäßen Vorrichtung umfaßt diese eine erste Sensoreinrichtung, die im Bereich des Gaspedals angeordnet ist und die aus zwei Sensoren besteht. Hierbei erfaßt der erste Sensor, der vorzugsweise unterhalb des Gaspedals angeordnet und als Drucksensor ausgebildet wird, die Bewegung des Fußes vom Gaspedal weg, insbesondere die Geschwindigkeit dieser Bewegung; während durch den anderen Sensor festgestellt wird, ob sich der Fuß des Fahrers noch auf dem Gaspedal befindet. Um dies zu erreichen, ist vorzugsweise der andere Sensor der ersten Sensoreinrichtung auf der zum Fahrer weisenden Oberfläche des Gaspedals positioniert und umfaßt insbesondere eine Vielzahl von Folientastern. Bei dieser erfindungsgemäßen Alternative wird der automatische Bremsvorgang ausgelöst, wenn der Fuß des Fahrers reflexartig den Druck auf das Gaspedal reduziert und gleichzeitig der Fuß des Fahrers von der Oberfläche des Gaspedals gelöst wird, was wiederum dazu führt, daß ein entsprechendes zweites Signal der Erfassungseinrichtung zugeführt wird.

Die andere Alternative der erfindungsgemäßen Vorrichtung weist eine Erfassungseinrichtung auf, die mit einer zweiten Sensoreinrichtung ausgestattet ist. Hierbei ist die zweite Sensoreinrichtung derart angeordnet und lokalisiert, daß sie die Position des rechten Fußes des Fahrers bei einer Fußbewegung aus der ersten Stellung in die zweite Stellung oder die Position des rechten Fußes in der zweiten Stellung erfaßt. Erfindungsgemäß umfaßt diese zweite Sensoreinrichtung mindestens einen dritten Sensor, der im Bereich zwischen dem Gaspedal und dem Bremspedal positioniert ist. Hierbei erzeugt dann dieser Sensor der zweiten Sensoreinrichtung ein drittes Signal, wenn sich der rechte Fuß des Fahrers zur zweiten Stellung hin bewegt, was nichts anderes bedeutet, als daß der rechte Fuß des Fahrers in den Bereich des Bremspedals gelangt. Besonders geeignet ist es jedoch, wenn dieser Sensor der zweiten Sensoreinrichtung relativ nahe am Gaspedal angeordnet ist, so daß das dritte Signal dann immer erzeugt wird, sobald sich der Fuß des Fahrers reflexartig vom Gaspedal löst und in Richtung auf das Bremspedal bewegt.

Die erfindungsgemäße Vorrichtung zum Bremsen eines Fahrzeugs weist eine Reihe von Vorteilen auf. So ist zunächst festzuhalten, daß durch die erfindungsgemäße Vorrichtung die gesamte Bremszeit und insbesondere der Anhalteweg erheblich verkürzt werden, was damit zusammenhängt, daß bei Anwendung der Erfindung die eingangs bechriebene Reaktionszeit und die Bremsansprechzeit eingespart werden. Wenn der Fahrer eines mit der erfindungsgemäßen Vorrichtung ausgestatteten Fahrzeugs in einer Verkehrssituation, die eine Bremsung erforderlich macht, reflexartig den Fuß vom Gaspedal löst, führt dies dazu, daß diese Positionsänderung von der dem Bremssteuersystem zugeordneten Erfassungseinrichtung festgestellt wird, so daß aufgrund dieses Reflexes des Fahrers zwangsläufig der Bremsvorgang ausgelöst wird. Darüber hinaus kann sich der Fahrer in einer derartigen Verkehrssituation wesentlich besser auf den Verkehr konzentrieren, da der Bremsvorgang automatisch ausgelöst wird und somit die Aufmerksamkeit des Fahrers nicht durch das Betätigen der Bremse vom Verkehr abgelenkt wird. Dieser Vorteil ist insbesondere dann gegeben, wenn relativ ungeübte Fahrer eine gefährliche Verkehrssituation zu bewältigen haben.

Die erfindungsgemäße Erfassungseinrichtung weist eine erste Sensoreinrichtung auf, die dem Gaspedal zugeordnet ist. Diese erste Sensoreinrichtung kann oberhalb des Gaspedals, im Bereich des Kardantunnels oder im Bereich der Gaspedalplatte oder des Fußabschnitts des Gaspedals angeordnet sein.

Vorteilhaft umfaßt die erste Sensoreinrichtung mindestens einen Sensor, beispielsweise einen ersten Sensor, der unterhalb des Gaspedals angeordnet ist. Dies beinhaltet insbesondere bei solchen Sensoren, die nicht berührungslos die Position des rechten Fußes des Fahrers erfassen, daß ein derartig unterhalb des Gaspedals angeordneter Sensor die Betätigung des Gaspedals nicht negativ beeinflußt.

Bezüglich der Ausgestaltung des Sensors bzw. der Sensoren der ersten Sensoreinrichtung sowie der nachfolgend noch beschriebenen Sensoreinrichtung ist allgemeinen festzuhalten, daß dieser bzw. diese Sensoren so auszubilden sind, daß er bzw. sie ohne Störung in der Lage ist bzw. sind, die Position des rechten Fußes des Fahrers im Bereich des Gaspedals bzw. des Bremspedals zu erfassen. Besonders geeignet ist es, wenn die erste Sensoreinrichtung einen Drucksensor umfaßt, da hier bei einem Verschwenken des Gaspedals die dabei auftretende Positionsänderung des rechten Fußes des Fahrers besonders einfach mit nur einem einzigen Sensor erfaßt werden kann. Selbstverständlich kann jedoch die erste Sensoreinrichtung bzw. die nachfolgend noch beschriebenen Sensoreinrichtungen auch als optischer Sensor oder als Infrarotsensor ausgebildet werden, wobei es bei diesen Sensoren dann gegebenenfalls zu empfehlen ist, mindestens zwei Sensoren vorzusehen.

Wenn die erste Sensoreinrichtung einen Drucksensor zum Erfassen des Gasfußes in seiner ersten Stellung aufweist, sieht eine besonders geeignete Ausführungsform der Vorrichtung vor, daß hierbei der Drucksensor nur dann ein Signal erzeugt, wenn die Druckänderung einen vorgegebenen Wert, insbesondere einen vorgegebenen Zeitwert oder Geschwindigkeitswert, überschreitet. Hierdurch wird sichergestellt, daß nicht bei jeder Geschwindigkeitsreduzierung des Fahrzeugs, hervorgerufen durch eine entsprechende Betätigung des Gaspedals, das Signal erzeugt. Vielmehr wird bei dieser Ausführungsform nur dann ein Signal erzeugt, wenn sich der Gasfuß reflexartig und somit mit einer hohen Geschwindigkeit bzw. innerhalb einer kurzen Zeit vom Gaspedal weg bewegt.

In Weiterbildung der zuvor beschriebenen Ausführungsform ist dann die Erfassungseinrichtung derart ausgestaltet, daß sie abhängig von dem gleichzeitigen Auftreten des ersten und/oder zweiten Signales sowie dem Auftreten des dritten Signales den Bremsvorgang automatisch auslöst.

Um bei der erfindungsgemäßen Vorrichtung ein ungewolltes automatisches Bremsen zu verhindern, sieht eine weitere, besonders vorteilhafte Ausführungsform der erfindungsgemäßen Vorrichtung vor, daß der Erfassungseinrichtung desweiteren eine Schaltung zur Erfassung der Zeitdifferenz zwischen dem Auftreten des ersten und/oder zweiten Signales und dem Auftreten des dritten Signales zugeordnet ist. Hierbei wird dann erst der Bremsvorgang ausgelöst, wenn innerhalb einer vorgegebenen Zeit gleichzeitig an der Erfassungseinrichtung das erste und/oder das zweite Signal sowie das dritte Signal anstehen.

Um bei der erfindungsgemäßen Vorrichtung ein unerwünschtes Verletzen von Insassen beim automatisch ausgelösten Bremsvorgang zu verhindern, weist eine weitere, ebenfalls vorteilhafte Ausführungsform der erfindungsgemäßen Vorrichtung eine dritte Sensoreinrichtung auf, die dem Sicherheitsgurt und/oder dem Gurtschloß, insbesondere allen Sicherheitsgurten und/oder allen Gurtschlössern zugeordnet ist. Hierbei erzeugt diese dritte Sensoreinrichtung dann ein viertes Signal, das der Erfassungseinrichtung zugeführt wird, wenn sich der Gurt im Eingriff mit dem Gurtschloß befindet bzw. wenn sich die Gurte in Eingriff mit den Gurtschlössern befinden. Bei dieser Ausführungsvariante der erfindungsgemäßen Vorrichtung wird dann der automatische Bremsvorgang nur ausgelöst, wenn gleichzeitig das erste und/oder zweite Signal sowie das dritte und vierte Signal an der Erfassungseinrichtung anstehen. Selbstverständlich ist es auch möglich, die dritte Sensoreinrichtung und/oder eine weitere Sensoreinrichtung derart mit dem Tachometer zu verbinden, daß abhängig von der jeweiligen Geschwindigkeit und insbesondere beim Überschreiten bzw. Unterschreiten einer vorgegebenen Geschwindigkeit, die erfindungsgemäße Vorrichtung erst aktiviert wird, so daß nur dann ein automatischer Bremsvorgang ausgelöst wird, wenn das Fahrzeug innerhalb eines bestimmten Geschwindigkeitsbereiches, z.B. mit einer Geschwindigkeit zwischen 1 km/h und 60 km/h, fährt. Hierdurch wird verhindert, daß es bei hohen Geschwindigkeiten, beispielsweise bei Autobahnfahrten, zu einem automatischen Bremsvorgang kommt.

Ebenso kann die dritte Sensoreinrichtung bzw. die zuvor genannte weitere Sensoreinrichtung, die dem Tachometer zugeordnet ist, derart ausgebildet sein, daß in einem ersten Geschwindigkeitsbereich, vorzugsweise in einem Geschwindigkeitsbereich unterhalb von 100 km/h, der volle Bremsvorgang automatisch ausgelöst wird, während bei einem Geschwindigkeitsbereich oberhalb von 100 km/h nur ein Teilbremsvorgang automatisch eingeleitet wird. Dies kann insbesondere dadurch erreicht werden, daß die erfindungsgemäße Vorrichtung ein Bremssteuersystem aufweist, daß über zwei Leitungen mit dem Hauptbremszylinder oder dem Radbremszylindern verbunden ist. In einer ersten Leitung ist dann ein erstes Ventil vorgesehen, das im vorstehend genannten ersten Geschwindigkeitsbereich (bis 100 km/h) über ein von der Erfassungseinrichtung erzeugtes Ausgangssignal geöffnet wird, während in der zweiten Leitung ein zweites Ventil vorhanden ist, das erst dann geöffnet wird, wenn das Fahrzeug im vorstehend genannten zweiten Geschwindigkeitsbereich (über 100 km/h) fährt, wobei das zweite Ventil dann als Reduzierventil ausgebildet ist, so daß dem Hauptbremszylinder bzw. den Radbremszylindern nur Bremsflüssigkeit mit einem entsprechend verringerten Druck zugeführt wird bzw. werden. Mit anderen Worten wird somit abhängig von der jeweiligen Geschwindigkeit entweder das erste oder das zweite Ventil geöffnet. Diese Ausführungsform weist den Vorteil auf, daß auch bei hohen Geschwindigkeiten die Gesamtbremszeit verkürzt wird, da bereits bei einem reflexartigen Bewegen des Gasfußes über die zweite Leitung und das geöffnete zweite Ventil eine automatische Teilbremsung erfolgt, so daß dementsprechend die Reaktionszeit und die Bremsansprechzeit entsprechend verringert werden.

Um die Bremsansprechzeit weiter zu verkürzen, sieht eine andere Ausführungsform der erfindungsgemäßen Vorrichtung vor, daß das Bremssteuersystem ein Fluidreservoir für ein unter Druck stehendes Bremsfluid aufweist. Abhängig von einem von der Erfassungseinrichtung erzeugten ersten und zweiten und/oder dritten Ausgangssignal wird dann an einem Fluidreservoir vorgesehenes Ventil schlagartig geöffnet, so daß das Bremsfluid dem Hauptbremszylinder und/oder den Radbremszylindern schlagartig zugeführt wird, um so den gewünschten spontanen Bremsvorgang auszulösen.

Eine andere Ausführungsform der erfindungsgemäßen Vorrichtung weist eine vierte Sensoreinrichtung auf, die mindestens einen Sensor umfaßt, der dem Bremspedal zugeordnet ist. Abhängig von der Betätigung des Bremspedales wird dann von der vierten Sensoreinrichtung ein fünftes Signal erzeugt, daß der Erfassungseinrichtung zugeführt wird. Beim Auftreten des fünften Signales erzeugt die Erfassungseinrichtung dann ein zweites Ausgangssignal, was wiederum dem Bremssteuersystem zugeführt wird, derart, daß beim Auftreten des zweiten Ausgangssignales der automatische Bremsvorgang beendet wird. Hierdurch wird erreicht, daß der Fahrer sein Fahrzeug nach Einleiten des Bremsvorgangs oder Betätigung des Gaspedals durch die erfindungsgemäße Vorrichtung noch individuell abbremsen bzw. beschleunigen kann, so daß bei dieser Ausführungsform der erfindungsgemäßen Vorrichtung zwar die Reaktionszeit und die Bremsansprechzeit erheblich verkürzt werden, der Fahrer dennoch stets die Verfügungsgewalt über sein Fahrzeug während des Bremsvorganges behält.

Eine weitere Ausführungsform der erfindungsgemäße Vorrichtung weist eine Erfassungseinrichtung auf, die derart ausgebildet ist, daß der ausgelöste automatische Bremsvorgang nur für eine vorgegebene Zeit anhält. Mit anderen Worten dauert hierbei der automatische Bremsvorgang nur etwa 0,3 Sekunden bis etwa 1,2 Sekunden, vorzugsweise etwa 0,5 Sekunden, so daß dann das Fahrzeug wahlweise manuell weiter gebremst, durch den Fahrer beschleunigt oder ausrollen gelassen werden kann. Diese Ausführungsvariante weist den Vorteil auf, daß in solchen Fahrsituationen, in denen der Fahrer aufgrund einer falschen Einschätzung der Verkehrssituation instinktiv seinen Fuß reflexartig vom Gaspedal löst und in Richtung auf das Bremspedal hin bewegt, was eine Auslösung des automatischen Bremsvorganges bewirkt, dieser unerwünschte automatische Bremsvorgang durch die Erfassungseinrichtung nach Ablauf der zuvor genannten Zeiten beendet wird. Auch diese Maßnahme trägt insbesondere in Verbindung mit der zuvor beschriebenen Ausführungsform wesentlich dazu bei, daß der Fahrer die Verfügungsgewalt über sein Fahrzeug behält.

Vorzugsweise ist bei der erfindungsgemäßen Vorrichtung die Erfassungseinrichtung als Mikroprozessor ausgebildet.

Abhängig von der Anzahl der Sensoreinrichtungen weist der Mikroprozessor dann mindestens einen ersten Eingang zur Aufnahme des von der ersten Sensoreinrichtung erzeugten Signales bzw. der von der ersten Sensoreinrichtung erzeugten Signale sowie mindestens einen zweiten Eingang zur Aufnahme des von der zweiten Sensoreinrichtung erzeugten Signales auf.

Bei den zuvor beschriebenen Ausführungsformen der erfindungsgemäßen Vorrichtung, die eine dritte Sensoreinrichtung und/oder eine vierte Sensoreinrichtung aufweisen, gelangen Mikroprozessoren zur Anwendung, die dementsprechend zusätzlich noch dritte und/oder vierte Eingänge aufweisen, um so die von der dritten und/oder vierten Sensoreinrichtung erzeugten Signale entsprechend verarbeiten zu können.

Die vorteilhafte Weiterbildungen der erfindungsgemäßen Vorrichtung sind in den Unteransprüchen angegeben.

Die erfindungsgemäße Vorrichtung wird nachfolgend anhand von Ausführungsbeispielen in Verbindung mit der Zeichnung näher erläutert. Hierbei zeigen:

Figur 1    eine schematische Darstellung einer Ausführungsform der Vorrichtung;

Figur 2    eine erste Ausführungsform einer elektrischen Schaltskizze; und

Figur 3     eine zweite Ausführungsform einer elektrischen Schaltskizze.

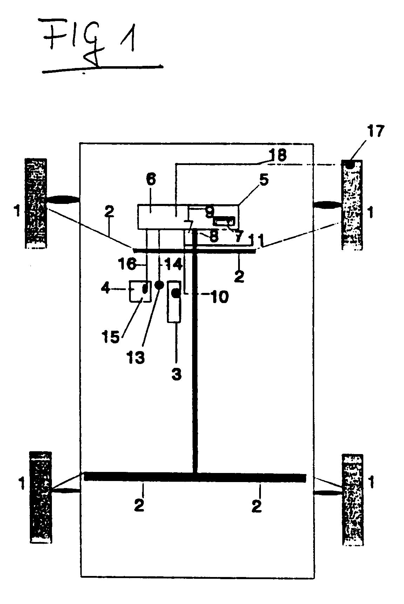

In der Figur 1 ist schematisch ein Fahrzeug in der Draufsicht abgebildet, wobei bei dieser Figur nur die wesentlichen Teile der zuvor beschriebenen Vorrichtung dargestellt sind.

Das Fahrzeug weist vier Räder 1 auf, wobei zu jedem Rad 1 Radbremsleitungen 2 führen, die von einem nicht gezeigten Hauptbremszylinder ausgehen und in nicht gezeigte Radbremszylinder münden.

Desweiteren sind vom Fahrzeug nur das Gaspedal 3 und das Bremspedal 4 schematisch dargestellt.

Ein insgesamt mit 5 bezeichnetes Bremssteuersystem, das schematisch abgebildet ist, weist eine Erfassungseinrichtung 6 auf. Desweiteren ist innerhalb des Bremssteuersystems 5 ein Reservoir 7 für unter Druck stehendes Bremsfluid angeordnet, wobei das Reservoir 7 in seiner Ausflußleitung mit einem elektrisch betätigten Ventil 8 ausgestattet ist.

Von der Erfassungseinrichtung 6 führt eine elektrische Leitung 9 zum Ventil 8.

Unterhalb des Gaspedals 3 ist ein Drucksensor 10 positioniert, der so mit der Erfassungseinrichtung 6 verbunden ist, daß der Erfassungseinrichtung 6 von dem Drucksensor 10 über die zwischengeschaltete Leitung 11 dann ein elektrisches Signal zugeführt wird, wenn sich der Druck am Gaspedal reflexartig verringert.

Zwischen dem Gaspedal 3 und dem Bremspedal 4 ist eine zweite Sensoreinrichtung, die den Sensor 13 umfaßt, positioniert, wobei der Sensor 13 dann ein drittes Signal erzeugt, wenn der Fuß des Fahrers vom Gaspedal 3 in Richtung des Bremspedales 4 bewegt wird.

Dem Bremspedal 4 ist eine vierte Sensoreinrichtung, die den Sensor 15 umfaßt, zugeordnet. Der Sensor 15 ist über eine Leitung 16 mit der Erfassungseinrichtung 6 verbunden. Der Sensor 15 erzeugt ein viertes Signal, wenn das Bremspedal 4 mit dem Fuß des Fahrers betätigt wird.

Ein weiterer Sensor 17 ist am vorderen rechten Rad 1 angeordnet und über eine Leitung 18 mit der Erfassungseinrichtung 6 verbunden.

Die zuvor beschriebene und in Figur 1 nur schematisch dargestellte Vorrichtung arbeitet wie folgt:

Sobald der Fahrer reflexartig den Druck von dem Gaspedal 3 zurücknimmt, erzeugt der Sensor 10 ein elektrisches Signal, das über die Leitung 11 der Erfassungseinrichtung zugeführt wird.

Bewegt sich dann der Fuß des Fahrers vom Gaspedal 3 in Richtung auf das Bremspedal 4, wird durch den Sensor 13 das dritte Signal über die Leitung 14 der Erfassungseinrichtung 6 zugeführt. Bedingt dadurch, daß die Erfassungseinrichtung 6 eine Zeitschaltung umfaßt, überprüft die Zeitschaltung, ob die vorgegebene Zeit zwischen dem Auftreten des ersten Signales und des dritten Signales unterschritten oder überschritten ist. Bei Unterschreitung des vorgegebenen Zeitwertes erzeugt die Erfassungseinrichtung 6 ein Ausgangssignal, das über die Leitung 9 dem elektrischen Ventil 8 zugeführt wird, was dazu führt, daß aus dem Reservoir 7 spontan über das dann geöffnete Ventil 8 Bremsflüssigkeit den Bremsleitungen 2 zugeführt wird, was wiederum eine Betätigung des Radbremszylinders auslöst und somit zu einem spontanen automatischen Abbremsen des Fahrzeuges führt.

Berührt dann der Fuß des Fahrers den dem Bremspedal 4 zugeordneten Sensor 15, so wird hierdurch ein fünftes Signal über die Leitung 16 der Erfassungseinrichtung 6 zugeführt. Bei Auftreten dieses fünften Signales erzeugt die Erfassungseinrichtung 6 ein zweites Ausgangssignal, das über die Leitung 9 zum Ventil 8 geführt wird und ein Schließen des Ventiles 8 bewirkt. Hierdurch tritt eine Deaktivierung des Bremssteuersystems ein, so daß das Fahrzeug dann konventionell durch den Fahrer weiter gebremst wird.

Der am vorderen rechten Rad vorgesehene Sensor 17 erzeugt ein geschwindigkeitsabhängiges Signal, das über die Leitung 18 der Erfassungseinrichtung 6 zugeführt wird, so daß abhängig von der jeweiligen Geschwindigkeit die Erfassungseinrichtung 6 und somit die zuvor beschriebene Vorrichtung aktiviert wird. Eine derartige Aktivierung geschieht vorzugsweise in Geschwindigkeitsbereichen, die im Stadtverkehr üblich sind.

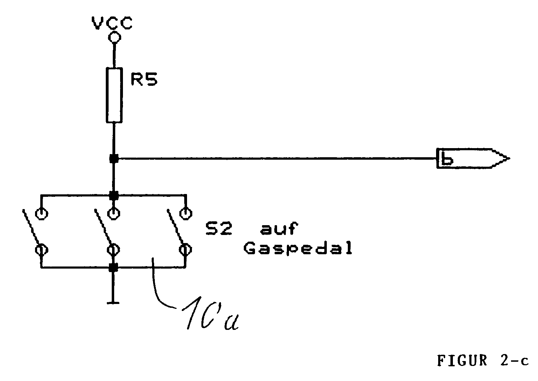

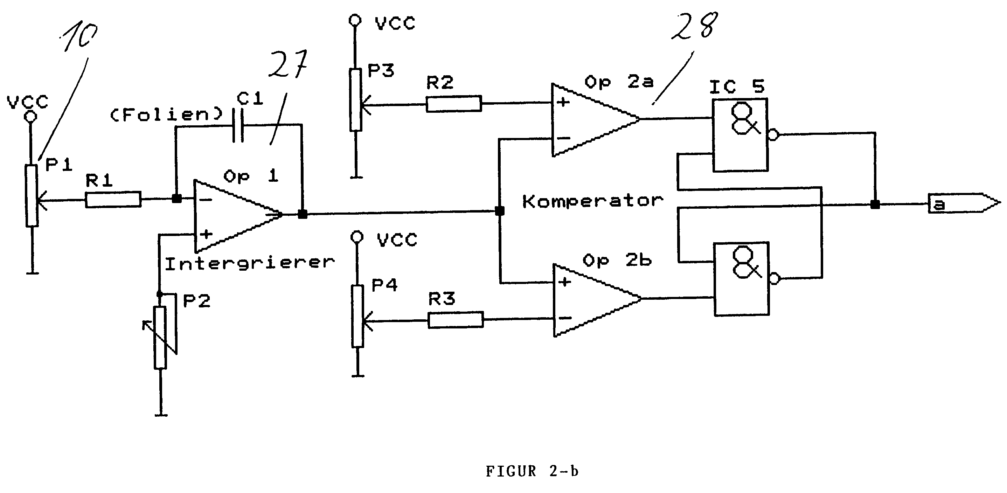

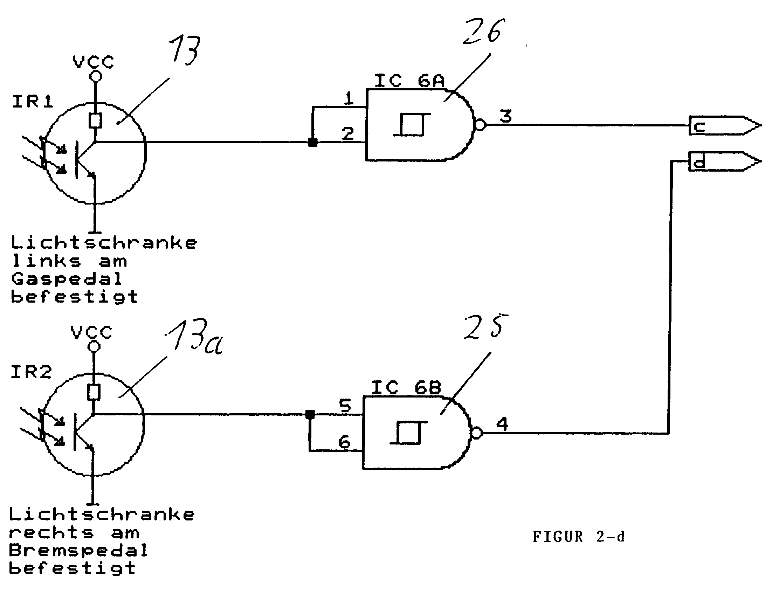

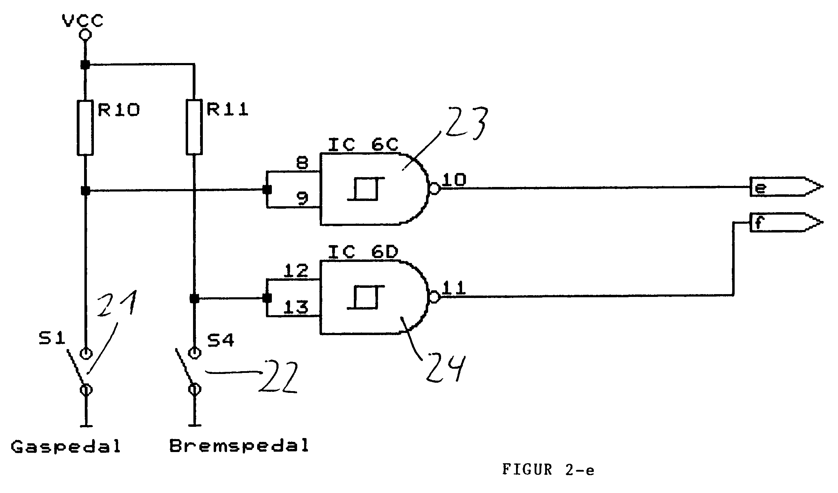

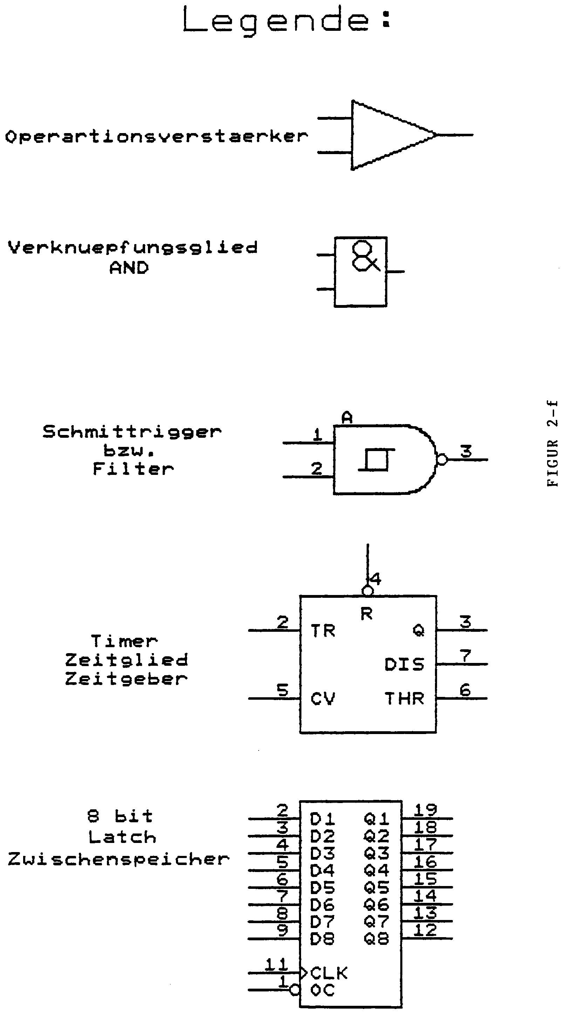

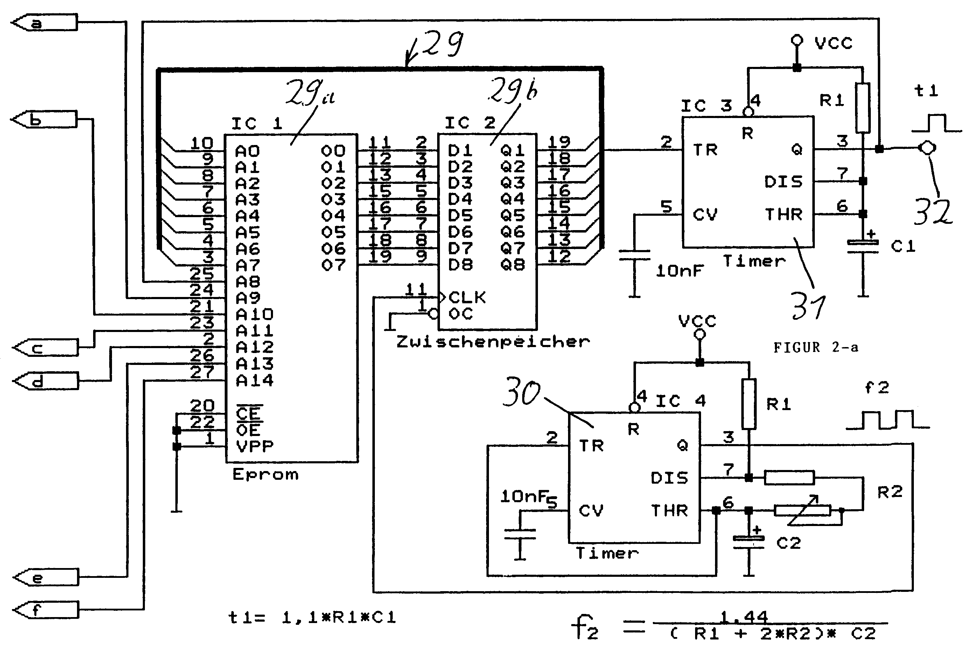

In Figur 2 ist eine erste Ausführungsform einer Schaltskizze wiedergegeben. Hierbei weist die erste Ausführungsform der Schaltskizze eine erste Sensoreinrichtung auf, wobei die erste Sensoreinrichtung aus den Sensoren 10 und 10 a besteht. Die Sensoren 10 und 10 a sind jeweils dem Gaspedal zugeordnet, wobei der Sensor 10 als Drucksensor unterhalb des Gaspedals angeordnet und als Potentiometer ausgebildet ist. An den Sensor 10 schließt sich ein Integrierer 27 sowie in Komperator 28 an, derart, daß über diese Bauteile die Geschwindigkeit der Rückführung des Gaspedals in entsprechende elektrische Signale umgewandelt wird, wenn der Fahrer reflexartig den rechten Fuß zurücknimmt. Hierbei muß die Rückholfeder des Gaspedales entsprechend stark ausgebildet sein, um so einen Rücksprung des Gaspedales zu ermöglichen. Das so erzeugte elektrische Signal wird einer Signalverarbeitungseinrichtung 29 zugeführt, die aus einem EPROM 29 a, einem Zwischenspeicher 29 b, einem Oszillator 30 sowie einem Timer 31 besteht.

Der zur ersten Sensoreinrichtung gehörende zweite Sensor 10 a umfaßt mehrere Folientaster, von denen drei beispielhaft in Figur 2 gezeigt sind. Hierbei sind diese Folientaster S 2 auf der zum Fahrer hin weisenden Oberfläche des Gaspedals angebracht. Durch diese Folientaster S 2 wird registriert, ob sich der Fuß des Fahrers noch auf dem Gaspedal befindet. Eine derartige Schaltung ist notwendig, um sicherzustellen, daß nicht bei einer schnellen Rücknahme des Gaspedals, angezeigt durch das entsprechende Signal des Sensors 10, die automatische Bremsung ausgelöst wird, obwohl der Fuß nicht vom Gaspedal weg bewegt worden ist. Dies wird dadurch erreicht, daß das Signal des ersten Sensors 10 so lange unterdrückt wird, bis der Sensor 10 a über ein entsprechendes weiteres elektrisches Signal anzeigt, daß der Fuß des Fahrers von der Oberfläche des Gaspedals gelöst wird.

Die zweite Sensoreinrichtung wird durch die beiden optischen Sensoren 13 und 13 a ausgebildet. Hierbei ist der Sensor 13 links vom Gaspedal und der Sensor 13 a rechts vom Bremspedal positioniert, wobei beide Sensoren 13 und 13 a als Lichtschranke ausgestaltet sind.

Die beiden Sensoren 13 und 13 a erfassen die Position des rechten Fußes des Fahrers, sobald dieser von der ersten Stellung (Gasstellung) in Richtung auf die zweite Stellung (Bremsstellung) bewegt wird. Zwischen der Signalverarbeitungseinrichtung und den beiden Sensoren 13 und 13 a sind jeweils Filter 25, 26 geschaltet, die bei der gezeigten Ausführungsform als Schmitt-Trigger ausgebildet sind. Bei einer Bewegung des rechten Fußes des Fahrers erzeugen diese Sensoren 13 und 13 a ein entsprechend gefiltertes elektrisches Signal, was der Signalverarbeitungseinrichtung 29 zugeführt wird.

Desweiteren weist die in Figur 2 abgebildete Schaltung zwei Federendschalter 21 bzw. 22 auf, wobei der erste Federendschalter 21 dem Gaspedal und der zweite Federendschalter 22 dem Bremspedal zugeordnet sind. Hierbei dienen diese beiden Federendschalter 21 und 22 dazu, daß alle an der Signalverarbeitungseinrichtung 29 anstehenden Signale gelöscht werden, wenn das Gaspedal bzw. das Bremspedal manuell durch den rechten Fuß des Fahrers betätigt wird, um so die automatische Bremsung zu beenden. Auch hier sind jeweils zwischen den Federendschaltern 21 bzw. 22 und der Signalverarbeitungseinrichtung 29 Filter 23 und 24, die als Schmitt-Trigger, ausgestaltet sind, angeordnet.

Wie bereits vorstehend ausgeführt ist, weist die Signalverarbeitungseinrichtung 29 ein EPROM 29 a sowie einen Zwischenspeicher 29 b, einen Oszillator 30 und einen Timer 31 auf. Am Ausgang der Signalverarbeitungseinrichtung 29 steht bei 32 dann ein Ausgangssignal an, das dem am Fahrzeug vorhandenen Bremssteuersystem (ABS) zugeführt wird und die automatische Bremsung einleitet. Dieses Ausgangssignal weist vorzugsweise eine Impulszeit von 4,2 msec auf, wobei diese Impulszeit am Timer 31 durch Abstimmung des Widerstandes R1 und der Kapazität C1 gemäß der Formel

$$t = 1,1 \times R1 \times C1$$

variierbar ist. Im konkreten Fall der Impulszeit von 4,2 msec ist R1 470 kOhm und C1 8,2 µF.

Der in der Signalverarbeitungseinrichtung vorgesehene Oszillator 30 taktet den Zwischenspeicher 29b und aktualisiert den Signalzustand.

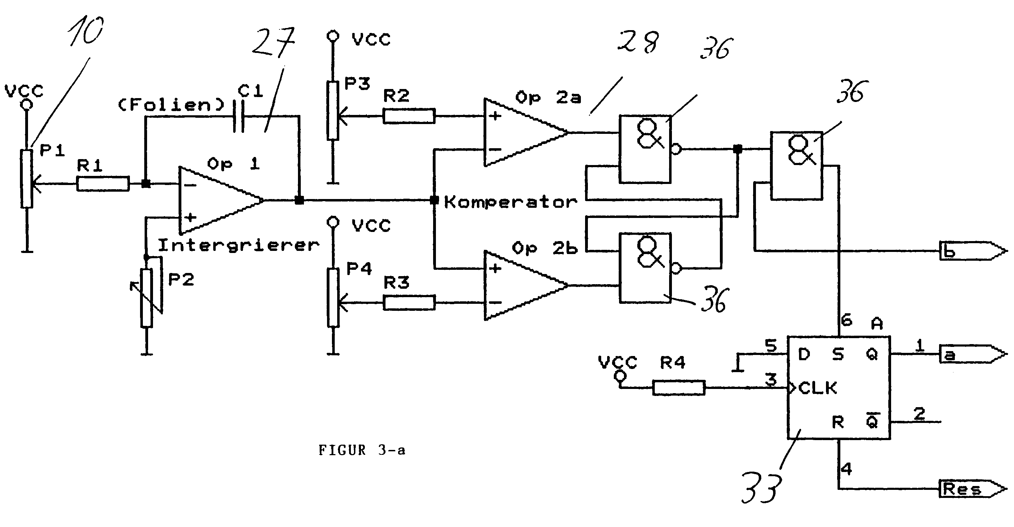

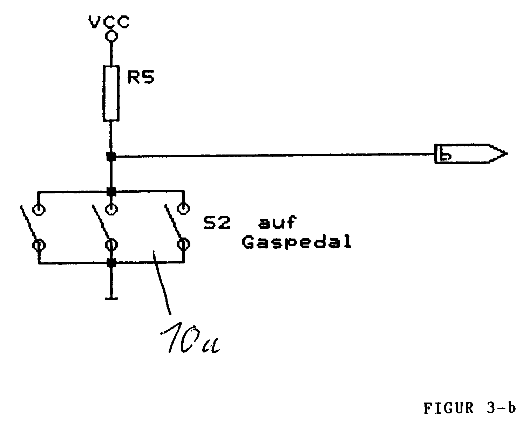

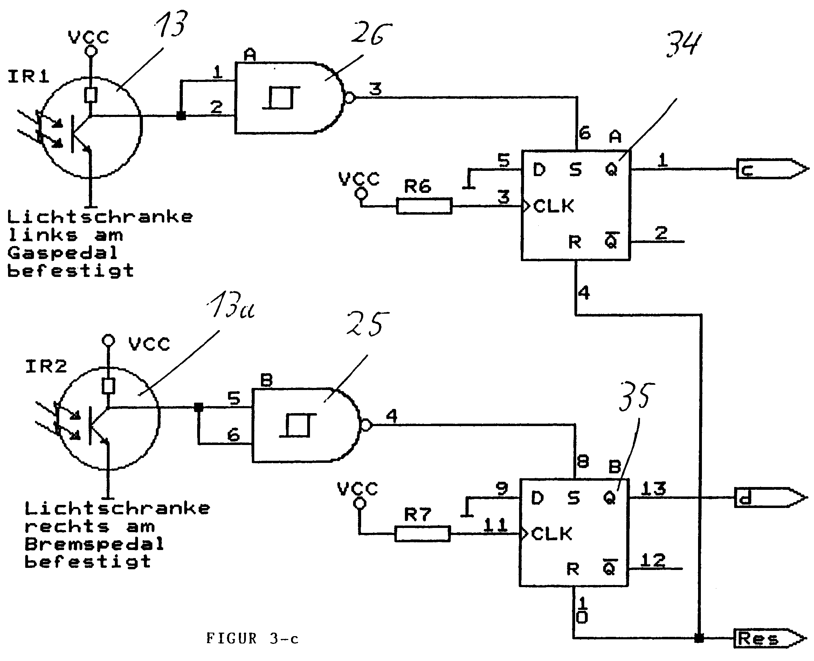

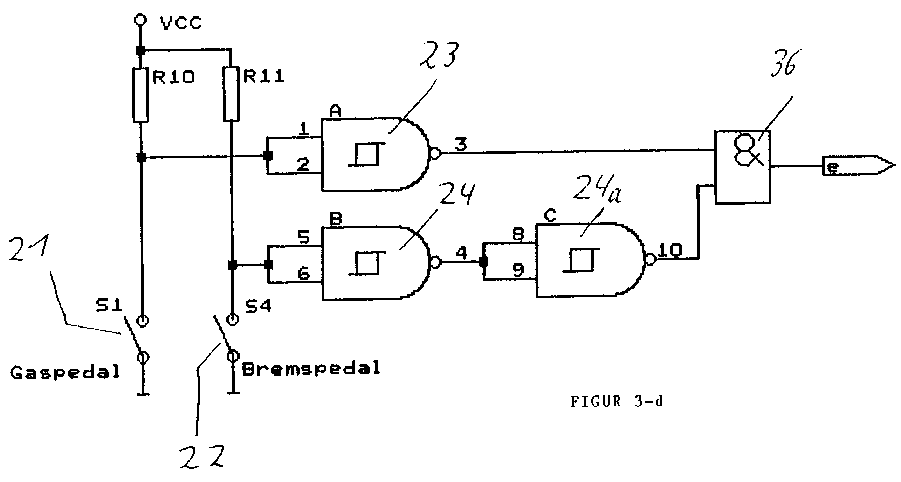

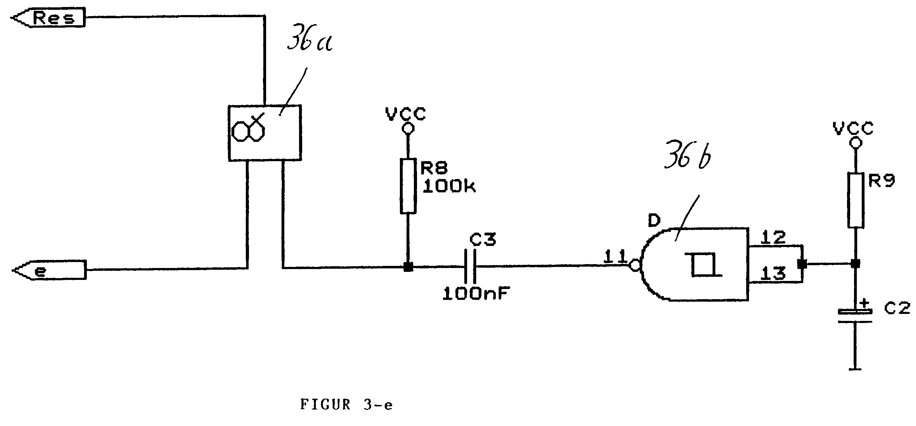

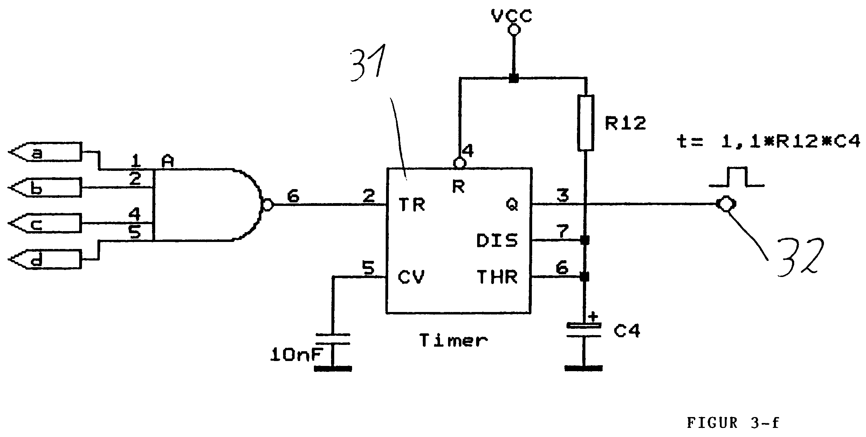

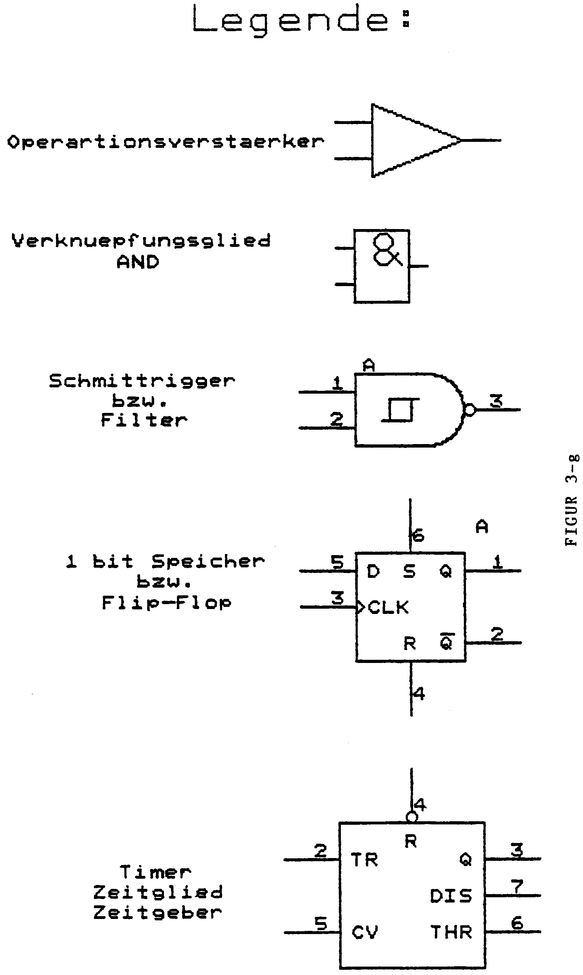

In der in Figur 3 gezeigten zweiten Ausführungsform der elektrischen Schaltung sind die selben Bauelemente mit den selben Bezugszeichen versehen wie in Figur 2.

Der wesentliche Unterschied zwischen den beiden Schaltungen gemäß Figur 2 und Figur 3 ist darin zu sehen, daß anstelle des EPROMS 29 a und des Zwischenspeichers 29 b sowie des Oszillators 30 die in Figur 3 gezeigte Schaltung drei Einzelspeicher 33, 34 und 35 aufweist, wobei diese Speicher als herkömmliche 1 bit-Speicher bzw. als Flip-Flop's ausgestaltet sind. Insgesamt umfaßt die in Figur 3 gezeigte Schaltung eine erste Baugruppe (I), bestehend aus dem ersten Sensor 10, dem Integrierer 27, dem Komperator 28, drei Verknüpfungsglieder 36 (AND) und einem Speicher 33. Mit dieser ersten Baugruppe wird dann ein elektrisches Signal erzeugt, wenn der Fuß des Fahrers reflexartig den Druck auf das Gaspedal zurücknimmt.

Die zweite Baugruppe (II), die den zweiten Sensor 10 a umfaßt, entspricht der zuvor bei der Figur 2 beschriebenen Baugruppe. Hierdurch wird registriert, daß sich der Fuß noch auf dem Gaspedal befindet, wie dies vorstehend bereits beschrieben ist.

Die dritte Baugruppe (III) unterscheidet sich von der in Figur 2 beschriebenen Anordnung dahingehend, daß zusätzlich bei der in der Figur 3 gezeigten Ausführungsform ein Speicher 34 vorhanden ist.

Die vierte Baugruppe (IV) weist ebenfalls zusätzlich noch einen Speicher 35 auf.

Die fünfte Baugruppe (V) entspricht bereits der zuvor im Zusammenhang mit den Federendschaltern 21 und 22 beschriebenen Bauteilen, wobei zusätzlich im Unterschied zu der Figur 2 noch ein weiteres Filter 24 a (Schmitt-Trigger) sowie ein Verknüpfungsglied 36 vorhanden ist. Diese fünfte Baugruppe ist über ein weiteres Verknüpfungsglied 36 a mit einer sechsten Baugruppe (VI) verbunden, wobei die sechste Baugruppe, die den Widerstand R9, den Kondensator C2, den Kondensator C3, den Widerstand R8 und ein Filter 36 b (Schmitt-Trigger) umfaßt, sicherstellt, daß die Schaltung einen definierten Anfangszustand erhält.

In der siebten Baugruppe (VII) werden die aus den zuvor aufgeführten Baugruppen erhaltenen Signale gesammelt und entsprechend verarbeitet, so daß am Ausgang 32 des Timers 31 ein Endsignal von 0,4 msec ansteht, das dem Bremssteuersystem (ABS) zugeführt wird und somit die automatische Vollbremsung dann auslöst, wenn die Signale der ersten vier Baugruppen positiv verlaufen und die fünfte Baugruppe nicht aktiviert ist.

**Patentansprüche**

1. Vorrichtung zum Bremsen in einem Fahrzeug mit einem Bremssteuersystem dem eine Erfassungseinrichtung (6) mit einer einen dem Gaspedal (3) des Fahrzeugs zugeordneten, ersten Sensor (10) umfassenden, ersten Sensoreinrichtung zugeordnet ist, wobei der erste Sensor (10) bei einer reflexartigen Änderung der Position des rechten Fußes des Fahrers von einer ersten Stellung am Gaspedal in eine zweite Stellung ein erstes Signal an die Erfassungseinrichtung (6) liefert und wobei ein automatisches Auslösen eines Bremsvorgangs durch die Erfassungseinrichtung (6) abhängig vom Auftreten des von dem ersten Sensor (10) erzeugten ersten Signals ist,
**dadurch gekennzeichnet,**
daß die erste Sensoreinrichtung noch einen anderen dem Gaspedal (3) zugeordneten Sensor (10a) umfaßt, der ein zweites, an die Erfassungseinrichtung (6) zu lieferndes Signal erzeugt, wenn sich der rechte Fuß des Fahrers vom Gaspedal löst, und daß die Erfassungseinrichtung (6) das erste Signal des ersten Sensors (10) so lange unterdrückt, bis der andere Sensor (10a) über ein zweites Signal anzeigt, daß der Fuß des Fahrers von der Oberfläche des Gaspedals (3) gelöst wird.

2. Vorrichtung zum Bremsen in einem Fahrzeug mit einem Bremssteuersystem, dem eine Erfassungseinrichtung (6) mit einer einen dem Gaspedal (3) des Fahrzeugs zugeordneten, ersten Sensor (10) umfassenden ersten Sensoreinrichtung zugeordnet ist, wobei der erste Sensor (10) bei einer reflexartigen Änderung der Position des rechten Fußes des Fahrers von einer ersten Stellung am Gaspedal in eine zweite Stellung ein erstes Signal an die Erfassungseinrichtung (6) liefert und wobei ein automatisches Auslösen eines Bremsvorgangs durch die Erfassungseinrichtung (6) abhängig vom Auftreten des von dem ersten Sensor erzeugten ersten Signals ist,
**dadurch gekennzeichnet,**
daß die Erfassungseinrichtung (6) eine ein zwischen dem Gaspedal (3) und dem Bremspedal (4) des Fahrzeugs positionierten, dritten Sensor (13) umfassende, zweite Sensoreinrichtung zum Erzeugen eines durch die Bewegung des rechten Fußes des Fahrers aus der ersten Stellung zu einer zweiten Stellung am Bremspedal (4) verursachten, an die Erfassungseinrichtung (6) zu liefernden, dritten Signals aufweist und daß die Erfassungseinrichtung (6) den Bremsvorgang erst abhängig vom Auftreten des dritten Signals auslöst.

3. Vorrichtung nach Anspruch 1 oder 2,
**dadurch gekennzeichnet,**
daß der der ersten Sensoreinrichtung zugeordnete erste Sensor (10) unterhalb des Gaspedals (3) angeordnet ist.

4. Vorrichtung nach mindestens einem der Ansprüche 1 bis 3,
**dadurch gekennzeichnet,**
daß der erste Sensor (10) als Drucksensor ausgebildet ist.

5. Vorrichtung nach Anspruch 4,
**dadurch gekennzeichnet,**
daß der Drucksensor (10) ein Signal erzeugt, wenn die Geschwindigkeit der Druckänderung einen vorgegebenen Wert überschreitet.

6. Vorrichtung nach mindestens einem der Ansprüche 1 bis 5,
**dadurch gekennzeichnet,**
daß die Erfassungseinrichtung (6) eine Schaltung zum Erfassen der Zeitdifferenz zwischen dem Auftreten des ersten Signals und dem Auftreten des zweiten und/oder dritten Signals aufweist, wobei der Bremsvorgang erst dann ausgelöst wird, wenn innerhalb einer vorgegebenen Zeit gleichzeitig an der Erfassungseinrichtung (6) das erste und/oder zweite Signal sowie das dritte Signal anstehen.

7. Vorrichtung nach mindestens einem der Ansprüche 1 bis 6,
**dadurch gekennzeichnet,**
daß eine dritte Sensoreinrichtung dem Sicherheitsgurt und/oder dem Gurtschloß zugeordnet ist, wobei die dritte Sensoreinrichtung dann ein viertes Signal der Erfassungseinrichtung zuführt, wenn sich der Gurt in Eingriff mit dem Gurtschloß befindet, und daß der Bremsvorgang nur dann ausgelöst wird, wenn gleichzeitig das erste Signal, das zweite Signal und/oder das dritte Signal sowie,das vierte Signal an der Erfassungseinrichtung (6) anstehen.

8. Vorrichtung nach mindestens einem der Ansprüche 1 bis 7,
**dadurch gekennzeichnet,**
daß das Bremssteuersystem ein Fluidreservoir (7) für ein unter Druck stehendes Bremsfluid aufweist und daß abhängig von einem von der Erfassungseinrichtung (6) erzeugten ersten Ausgangssignal ein am Fluidreservoir vorgesehenes Ventil (8) geöffnet und somit der Bremsvorgang ausgelöst wird.

9. Vorrichtung nach mindestens einem der Ansprüche 1 bis 8,
**dadurch gekennzeichnet,**
daß eine vierte, dem Bremspedal (4) zugeordnete Sensoreinrichtung (15) vorgesehen ist, die abhängig von der Betätigung des Bremspedals (4) ein fünftes Signal der Erfassungseinrichtung (6) zuführt, wobei die Erfassungseinrichtung (6) beim Auftreten des fünften Signals ein zweites Ausgangssignal dem Bremssteuersystem zuführt, um so den automatischen Bremsvorgang zu beenden.

10. Vorrichtung nach mindestens einem der Ansprüche 1 bis 9,
**dadurch gekennzeichnet,**
daß die Erfassungseinrichtung (6) als Mikroprozessor ausgebildet ist.

11. Vorrichtung nach Anspruch 10,
**dadurch gekennzeichnet,**
daß der Mikroprozessor mindestens einen ersten Eingang zur Aufnahme des von der ersten Sensoreinrichtung erzeugten Signals sowie mindestens einen zweiten Eingang zur Aufnahme des von der zweiten Sensoreinrichtung erzeugten Signals aufweist.

12. Vorrichtung nach mindestens Ansprüchen 7 und 10,
**dadurch gekennzeichnet,**
daß der Mikroprozessor einen dritten Eingang zur Aufnahme des von der dritten Sensoreinrichtung erzeugten elektrischen Signals aufweist.

13. Vorrichtung nach mindestens Ansprüchen 9 und 10,
**dadurch gekennzeichnet,**
daß der Mikroprozessor einen vierten Eingang zur Aufnahme des von der vierten Sensoreinrichtung erzeugten Signals aufweist.

**Claims**

1. Braking device for a motor vehicle with a braking control system to which a detecting device (6) with a first sensor device comprising a first sensor (10) allocated to the accelerator (3) of the vehicle is assigned, whereby the first sensor (10) in a reflex-like change in position of the right foot of the driver from a first position on the accelerator to a second position delivers a first signal to the detecting device (6) and whereby an automatic triggering of a braking process by the detecting device (6) is dependent on the appearance of the first signal generated by the first sensor (10),
**characterised in that**
the first sensor device comprises an additional sensor (10a) assigned to the accelerator (3) which sensor produces a second signal to be delivered to the detecting device (6), when the right foot of the driver is lifted from the accelerator, and in that the detecting device (6) suppresses the first signal of the first sensor (10) until the additional sensor (10a) shows by a second signal that the foot of the driver is removed from the surface of the accelerator (3).

2. Braking device for a motor vehicle with a braking control system to which a detecting device (6) with a first sensor device comprising a first sensor (10) allocated to the accelerator (3) of the vehicle is assigned, whereby the first sensor (10) in a reflex-like change in position of the right foot of the driver from a first position on the accelerator to a second position delivers a first signal to the detecting device (6) and whereby an automatic triggering of a braking process by the detecting device (6) is dependent on the appearance of the first signal generated by the first sensor (10),
**characterised in that**
the detecting device (6) comprises a second sensor device comprising a third sensor (13) positioned between the accelerator (3) and the braking pedal (4) of the vehicle to generate a third signal which is produced by the movement of the right foot of the driver from the first position to a second position on the braking pedal (4) and is to be delivered to the detecting device (6), and in that the detecting device only triggers the braking process in dependency on the appearance of the third signal.

3. Device according to claim 1 or 2,
**characterised in that**
the first sensor (10) assigned to the first sensor device is arranged underneath the gas pedal (3).

4. Device according to at least one of claims 1 to 3,
**characterised in that**
the first sensor (10) is designed as a pressure sensor.

5. Device according to claim 4,
**characterised in that**
the pressure sensor (10) produces a signal when the speed of the pressure change exceeds a prescribed value.

6. Device according to at least one of claims 1 to 5,
**characterised in that**
the detecting device (6) has a switch to detect the time difference between the appearance of the first signal and the appearance of the second and/or third signal, whereby the braking process is only triggered when within a prescribed time the first and/or second signal and the third signal appear simultaneously at the detecting device (6).

7. Device according to at least one of claims 1 to 6
**characterised in that**
a third sensor device is assigned to the seat belt and/or the seat belt lock whereby the third sensor device then supplies a fourth signal to the detecting device, when the seat belt is in engagement with the belt lock, and in that the braking process is only triggered when the first signal, the second signal and/or the third signal and the fourth signal appear simultaneously at the detecting device (6).

8. Device according to at least one of claims 1 to 7,
**characterised in that**
the braking control system has a fluid reservoir (7) for braking fluid under pressure, and in that depending on a first output signal generated by the detecting device (6) a valve (8) provided at the fluid reservoir is opened and the braking process is thus triggered.

9. Device according to at least one of the claims 1 to 8,
**characterised in that**
a fourth sensor device (15) assigned to the braking pedal (4) is provided which depending on the activation of the braking pedal (4) supplies a fifth signal to the detecting device (6), whereby the detecting device (6) on the appearance of the fifth signal supplies a second output signal to the braking control system in order thus to end the automatic braking process.

10. Device according to at least one of claims 1 to 9, **characterised in that** the detecting device (6) is designed as a microprocessor.

11. Device according to claim 10, **characterised in that** the microprocessor has at least a first input for receiving the signal produced by the first sensor device and at least a second input for receiving the signal produced by the second sensor device.

12. Device according to at least claims 7 and 10, **characterised in that** the microprocessor has a third input for receiving the electric signal produced by the third sensor device.

13. Device according to at least claim 9 and 10, **characterised in that** the microprocessor has a fourth input for receiving the signal produced by the fourth sensor device.

**Revendications**

1. Installation de freinage dans un véhicule à système de commande de freinage auquel est associé un dispositif de détection (6) qui comporte un premier dispositif capteur comprenant un premier capteur (10) associé à la pédale d'accélérateur (3) du véhicule, le premier capteur (10) envoyant au dispositif de détection (6) un premier signal lorsque la position du pied droit du conducteur est modifiée une première fois par réflexe à partir d'un premier emplacement sur la pédale d'accélérateur vers un deuxième emplacement, et un déclenchement automatique d'un processus de freinage par le dispositif de détection (6) étant dépendant de l'apparition du premier signal engendré par le premier capteur (10), caractérisée en ce que le premier dispositif de capteur comprend en outre un autre capteur (10a) associé à la pédale d'accélérateur (3) qui engendre un deuxième signal à envoyer au dispositif de détection (6) lorsque le pied droit du conducteur se sépare de la pédale d'accélérateur et en ce que le dispositif de détection (6) supprime le premier signal du premier capteur (10) jusqu'à ce que l'autre capteur (10a) indique par un deuxième signal que le pied du conducteur est séparé de la surface de la pédale d'accélérateur (3).

2. Installation de freinage dans un véhicule à système de commande de freinage auquel est associé un dispositif de détection (6) qui comporte un premier dispositif capteur comprenant un premier capteur (10) associé à la pédale d'accélérateur (3) du véhicule, le premier capteur (10) envoyant au dispositif de détection (6) un premier signal lorsque la position du pied droit du conducteur est modifiée une première fois par réflexe à partir d'un premier emplacement sur la pédale d'accélérateur vers un deuxième emplacement, et un déclenchement automatique d'un processus de freinage par le dispositif de détection (6) étant dépendant de l'apparition du premier signal engendré par le premier capteur (10), caractérisée en ce que le dispositif de détection (6) comporte un deuxième dispositif de capteur comprenant un troisième capteur (13) positionné entre la pédale d'accélérateur (3) et la pédale de frein du véhicule pour engendrer un troisième signal, à envoyer au dispositif de détection (6), provoqué par le déplacement du pied droit du conducteur à partir de la première position vers une deuxième position sur la pédale de frein (4) et en ce que le dispositif de détection (6) ne déclenche le processus de freinage qu'en fonction de l'apparition du troisième signal.

3. Installation selon la revendication 1 ou 2, caractérisée en ce que le premier capteur (10) associé au premier dispositif de capteur est agencé au-dessous de la pédale d'accélérateur (3).

4. Installation selon au moins une des revendications 1 à 3, caractérisée en ce que le premier capteur (10) est réalisé sous la forme d'un capteur de pression.

5. Installation selon la revendication 4, caractérisée en ce que le capteur de pression (10) engendre un signal lorsque la vitesse de la variation de pression dépasse une valeur prédéterminée.

6. Installation selon au moins une des revendications 1 à 5, caractérisée en ce que le dispositif de détection (6) comporte un circuit de détection de la différence de temps entre l'apparition du premier signal et l'apparition du deuxième et/ou du troisième signal, le processus de freinage n'étant ensuite déclenché que lorsque le premier et/ou le deuxième signal ainsi que le troisième signal sont présents simultanément au dispositif de détection (6) à l'intérieur d'un temps prédéterminé.

7. Installation selon au moins une des revendication 1 à 6, caractérisée en ce qu'un troisième dispositif de capteur est associé à la ceinture de sécurité et/ou à la fermeture de ceinture, le troisième dispositif de capteur envoyant un quatrième signal au dispositif de détection lorsque la ceinture se trouve en prise avec la fermeture de ceinture, et en ce que le processus de freinage n'est déclenché que lorsque le premier signal, le deuxième signal et/ou le troisième signal ainsi que le quatrième signal sont présents simultanément au dispositif de détection (6).

8. Installation selon au moins une des revendications 1 à 7, caractérisée en ce que le dispositif de commande de freinage comporte un réservoir (7) de fluide destiné à un fluide de freinage sous pression et en ce qu'une vanne (8) prévue sur le réservoir de fluide est ouverte en fonction d'un premier signal de sortie engendré par le dispositif de détection (6) et que le processus de freinage est ainsi déclenché.

9. Installation selon au moins une des revendications 1 à 8, caractérisée en ce qu'il est prévu un quatrième dispositif de capteur (15) qui est associé à la pédale de frein (4) et qui envoie un cinquième signal au dispositif de détection (6) en fonction de l'actionnement de la pédale de frein (4), le dispositif de détection (6) envoyant au système de commande de freinage, lors de l'apparition du cinquième signal, un deuxième signal de sortie afin de terminer ainsi automatiquement le processus de freinage.

10. Installation selon au moins une des revendications 1 à 9, caractérisée en ce que le dispositif de détection (6) est réalisé sous la forme d'un microprocesseur.

11. Installation selon la revendication 10, caractérisée en ce que le microprocesseur comporte au moins une première entrée pour recevoir le signal engendré par le premier dispositif de capteur ainsi qu'au moins une deuxième entrée pour recevoir le signal engendré par le deuxième dispositif de capteur.

12. Installation selon au moins les revendications 7 et 10, caractérisée en ce que le microprocesseur comporte une troisième entrée pour recevoir le signal électrique engendré par un troisième dispositif de capteur.

13. Installation selon au moins les revendications 9 et 10, caractérisée en ce que le microprocesseur comporte une quatrième entrée pour recevoir le signal engendré par le quatrième dispositif de capteur.

FIG 1

VCC

R5

b

S2 auf
Gaspedal

10'a

EP 0 706 466 B1

FIGUR 2-c

VCC

10

27

(Folien)  C1

P1

R1

Op 1

Intergrierer

P2

VCC

P3

R2

Op 2a

Komperator

28

IC 5

&

a

VCC

P4

R3

Op 2b

&

FIGUR 2-b

EP 0 706 466 B1

FIGUR 2-d

VCC

R10    R11

IC 6C    23

8
9    10    e

f

IC 6D

12
13    11

24

S1    21

S4    22

Gaspedal    Bremspedal

FIGUR 2-e

# Legende:

Operartionsverstaerker

Verknuepfungsglied
AND

Schmittrigger
bzw.
Filter

A

1

2

3

Timer
Zeitglied
Zeitgeber

4

R

2  TR        Q  3

DIS  7

5  CV      THR  6

8 bit
Latch
Zwischenspeicher

| 2 | D1 | Q1 | 19 |
| 3 | D2 | Q2 | 18 |
| 4 | D3 | Q3 | 17 |
| 5 | D4 | Q4 | 16 |
| 6 | D5 | Q5 | 15 |
| 7 | D6 | Q6 | 14 |
| 8 | D7 | Q7 | 13 |
| 9 | D8 | Q8 | 12 |

11  >CLK

1  OC

FIGUR 2-f

16

FIGUR 2-a

$$t1 = 1,1*R1*C1$$

$$f_2 = \frac{1,44}{(R1 + 2*R2)* C2}$$

EP 0 706 466 B1

FIGUR 3-a

VCC

R5

S2 auf
Gaspedal

10a

FIGUR 3-b

EP 0 706 466 B1

EP 0 706 466 B1

IR1

VCC

*13*

A

1

2

*26*

3

*34*

Lichtschranke
links am
Gaspedal
befestigt

6    A

5    D    S    Q    1

VCC    R6    3    CLK

R    Q̄    2

c

4

IR2

VCC

*13a*

B

5

6

*25*

4

Lichtschranke
rechts am
Bremspedal
befestigt

8    B

9    D    S    Q    13

VCC    R7    11    CLK

R    Q̄    12

*35*

d

10

Res

FIGUR 3-c

FIGUR 3-d

EP 0 706 466 B1

EP 0 706 466 B1

Res

36 a

VCC

R8
100k

VCC

36 b

R9

C3

D

11

12

13

100nF

C2

e

FIGUR 3-e

FIGUR 3-f

$$t = 1,1*R12*C4$$

EP 0 706 466 B1

# Legende:

Operartionsverstaerker

Verknuepfungsglied
AND

Schmittrigger
bzw.
Filter

A
1
2
3

1 bit Speicher
bzw.
Flip-Flop

6
A
5  D   S   Q  1
3  >CLK
       R   Q̄  2
4

Timer
Zeitglied
Zeitgeber

4
2  TR   R    Q  3
            DIS  7
5  CV   THR  6

FIGUR 3-g